Europäisches Patentamt

European Patent Office

Office européen des brevets

(19)

(11) Numéro de publication : **0 033 428**
**B1**

(12) # FASCICULE DE BREVET EUROPÉEN

(45) Date de publication du fascicule du brevet :
03.08.83

(21) Numéro de dépôt : **80401052.8**

(22) Date de dépôt : **11.07.80**

(51) Int. Cl.³ : **F 16 K 47/08**, F 16 K 3/08//
**F16K47/02**

(54) **Robinet à liquide à faible émission sonore.**

(30) Priorité : **29.01.80 FR 8001897**

(43) Date de publication de la demande :
**12.08.81 Bulletin 81/32**

(45) Mention de la délivrance du brevet :
**03.08.83 Bulletin 83/31**

(84) Etats contractants désignés :
**AT BE CH DE GB IT LI NL SE**

(56) Documents cités :
EP A 0 003 459
FR A 2 352 229
FR A 2 410 779
US A 2 165 639
US A 3 570 810

(73) Titulaire : **L.C.C.-C.I.C.E. - COMPAGNIE EURO-
PEENNE DE COMPOSANTS ELECTRONIQUES
101, Boulevard Murat
F-75781 Paris Cedex 16 (FR)**

**ETABLISSEMENTS TRUBERT
194, Avenue du Général Leclerc
F-78220 Viroflay (FR)**

(72) Inventeur : **Carla, Bernard
THOMSON-CSF SCPI 173, Bld Haussmann
F-75360 Paris Cedex 08 (FR)**
Inventeur : **Trubert, Denis
THOMSON-CSF SCPI 173, Bld Haussmann
F-75360 Paris Cedex 08 (FR)**

(74) Mandataire : **Eisenbeth, Jacques Pierre et al
THOMSON-CSF SCPI 173, Bld Haussmann
F-75379 Paris Cedex 08 (FR)**

## Robinet à liquide à faible émission sonore

La présente invention se rapporte aux dispositifs connus sous le nom générique de robinets, et plus particulièrement à ceux qui sont utilisés dans le domaine de la distribution domestique de l'eau.

Les robinets du type le plus répandu font appel à un siège fixe muni d'une ouverture circulaire pour le passage de l'eau, obturable par un clapet mobile de caoutchouc ou de fibre pouvant se déplacer perpendiculairement au siège. La commande du clapet est en général progressive, par mise en œuvre d'une vis, dont la rotation dans l'embase du robinet provoque, par une de ses extrémités la translation du clapet, l'autre extrémité constituant la tige ou « queue » de manœuvre.

Cependant, cette structure possède plusieurs inconvénients, liés d'une part à l'importance du déplacement nécessaire du clapet, pour passer de l'arrêt au débit maximal, rendant imprécise la fermeture, et d'autre part à son évolution dans le temps, liée notamment à l'écrasement progressif du clapet, en particulier si l'eau est chaude. Cette évolution entraîne celle de la position angulaire finale à la fermeture, ce qui est très gênant lorsque le bouton de commande comporte une queue de manœuvre dont est souhaitable une orientation géométriquement bien définie en position de fermeture. Cela est par exemple indispensable dans le cas de mélangeurs comportant deux mécanismes dont les éléments de manœuvre doivent être, pour des raisons de symétrie, parfaitement et identiquement orientés en position de fermeture.

C'est pourquoi on a plus récemment proposé des dispositifs de but identique, mettant en œuvre comme siège et clapet, deux disques, le plus souvent en matériau céramique, munis d'ouvertures et disposés en superposition, leur rotation mettant ces ouvertures soit en coïncidence, ce qui correspond au passage de l'eau, soit en opposition, ce qui correspond à la fermeture du robinet. Ces mécanismes sont plus satisfaisants à cause de la précision géométrique de leur fermeture, la stabilité de leur débit, pour une ouverture donnée, quelle que soit la température de l'eau contrôlée, et enfin à cause de leur fiabilité. (Voir p. ex. EP-A-3 459).

Les ouvertures des disques fixes et mobiles ont en général la forme de secteurs, soit unique, soit au nombre de deux ou de trois, qui correspondent, respectivement, pour obtenir le passage complet de la fermeture à l'ouverture, à une rotation de la tige de commande de 180°, 90° et 60° ; les robinets à deux secteurs, les plus répandus, sont souvent désignés sous le nom de « quart de tour », nom qui sera utilisé dans toute la suite.

Cependant, malgré leurs avantages, ces robinets présentent des inconvénients dans deux domaines : d'une part, seule une partie de la surface totale de la section du siège, celle des secteurs, sert au passage de l'eau, ce qui conduit, à débit égal, à un encombrement plus grand par rapport à celui du robinet à clapet où est utilisée toute la section de passage ; d'autre part, le principe même de l'obturation partielle détermine, par les surfaces planes perpendiculaires aux lignes de courant qu'il implique, des perturbations hydrodynamiques dans l'écoulement de l'eau ; cet écoulement passe ainsi du régime « laminaire » en régime « turbulent », entraînant, particulièrement près de la fermeture, la présence de tourbillons générateurs de bruit. Ce phénomène phonique est particulièrement prononcé lorsque, par une réduction des dimensions du robinet quart-de-tour, en vue de les rendre analogues à celles d'un robinet à clapet classique, la vitesse de passage de l'eau dans les ouvertures est augmentée.

La présente invention concerne un robinet quart-de-tour à disques qui ne comporte pas ces inconvénients, tout en présentant un volume suffisamment petit pour se prêter à l'interchangeabilité avec la plupart des mécanismes à clapet de caoutchouc connus, et en possédant des caractéristiques hydrauliques et phoniques particulièrement avantageuses.

Dans son fondement, l'invention fait appel à une forme particulière de la surface d'entrée du disque fixe, à savoir, au lieu d'un plan parallèle au plan de la surface de sortie de celui-ci, une forme comportant en dièdre en toit, dont l'arête est perpendiculaire à l'axe de symétrie des deux ouvertures en secteurs. Chaque plan incliné du dièdre est percé par un des deux secteurs, dont l'ouverture est ainsi encadrée par une portion de ce plan. La fonction de ces portions est d'assurer l'orientation des filets fluides, en guidant avec précision les lignes de courant de telle sorte que le régime laminaire de l'écoulement soit conservé, même aux petites ouvertures.

L'invention concerne un robinet à liquide à faible émission sonore, comportant un corps cylindrique avec un tube de sortie pour l'évacuation du liquide, un support intérieur cylindrique pour recevoir un premier disque fixe percé d'ouvertures, avec une face d'entrée pour le liquide, et une tige de commande assurant la rotation, en secteurs diamétricalement opposés, d'un second disque tournant percé d'ouvertures, en secteur, les deux disques étant appliqués l'un sur l'autre, en définissant par leur position angulaire relative, le passage du liquide, caractérisé en ce que la face d'entrée du disque fixe a la forme d'un dièdre saillant, dont l'arête est parallèle à la face d'entrée, chaque ouverture en secteur étant orientée suivant le plan perpendiculaire à l'arête du dièdre.

Le résultat procuré est que, par suite du rejet de l'établissement du régime d'écoulement « turbulent » générateur de tourbillons, le robinet n'émet, quel que soit son degré d'ouverture, qu'un niveau sonore remarquablement plus faible que les robinets à disques de l'art connu.

Une seconde disposition caractérise le robinet de l'invention, celle de la mise en œuvre d'une plaquette percée d'une pluralité de trous, disposée devant la face de sortie du disque mobile. Cette plaquette, en forme de tamis métallique, ou de grillage à mailles serrées, a pour but de fractionner et de briser les éventuels tourbillons hydrodynamiques, créés dans la canalisation d'arrivée, en amont du robinet. De tels tamis sont déjà utilisés dans la pratique, mais la présente invention prévoit de conférer à leur surface la forme de deux cônes inclinés, en sens inverse, et disposés côte à côte, de telle sorte que le sommet de chaque cône incliné, présent dans chacune des deux ouvertures corresponde au sens de la fermeture du robinet. Aux petites ouvertures, en effet, la vitesse de l'eau est alors maximale, et la présence d'un grillage anti-tourbillonnaire au voisinage immédiat de l'ouverture a été constatée comme particulièrement efficace.

L'invention sera mieux comprise à l'aide de la description ci-après, en s'appuyant sur les figures annexées, où :

la figure 1 représente un robinet quart-de-tour suivant l'art connu ;

la figure 2 représente une variante, en coupe partielle, d'une partie d'un robinet quart-de-tour suivant l'art connu ;

la figure 3 représente un disque fixe du robinet quart-de-tour suivant l'invention ;

la figure 4 représente une variante d'un disque fixe selon l'invention ;

la figure 5 représente, suivant deux vues (a) et (b), deux positions des deux disques fixe et mobile équipés d'un cône grillagé ;

la figure 6 représente un robinet quart de tour selon l'invention, équipé d'une tige de commande à extrémité interne en forme de cône.

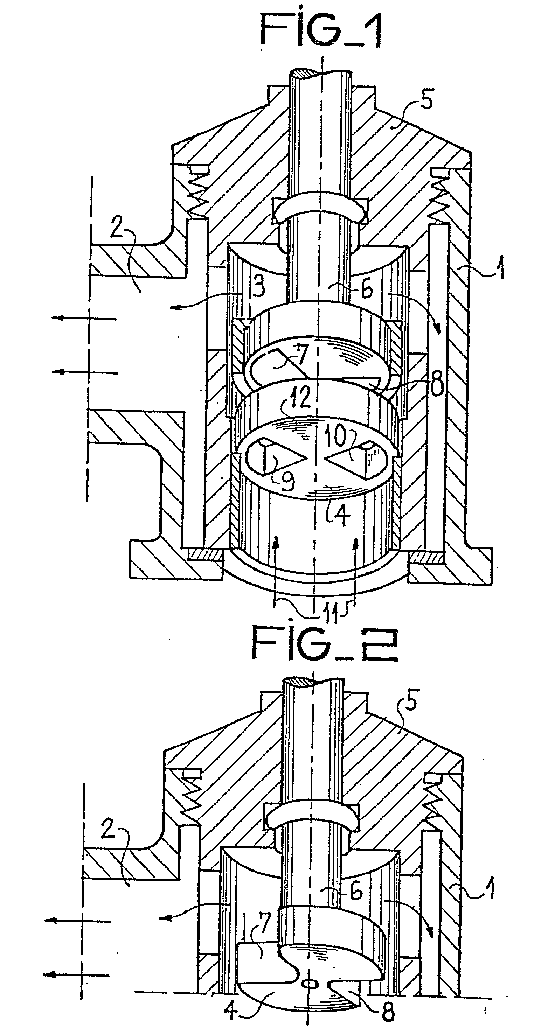

La figure 1 représente un robinet du type quart-de-tour selon l'art connu. Il est constitué d'un corps 1, de forme générale cylindrique, sur la surface latérale duquel une sortie d'eau 2 est prévue. Le dispositif de réglage de débit de l'eau est constitué de deux disques 3 et 4, en forme de cylindre de faible hauteur, représentés écartés sur la figure 1 pour une meilleure compréhension, mais qui sont normalement appliqués l'un sur l'autre. Le disque 4 est fixe, et solidaire d'un support 5, et le disque 3 est tournant, sous l'action de la tige de commande 6. Les disques portent chacun deux ouvertures en forme de secteur, d'une part, 7 et 8, et d'autre part 9 et 10. Cette rotation ne peut dépasser un angle de 90°, grâce à un moyen non représenté, ce qui assure soit la mise en coïncidence des ouvertures, soit leur mise en quadrature, avec toutes les positions intermédiaires.

Lorsque l'eau est introduite, suivant les flèches 11, à la face d'entrée 12 du disque fixe, son débit est ainsi ajusté depuis l'arrêt jusqu'à la valeur maximale liée à la dimension des ouvertures, alors mises en coïncidence. Cependant, ce type de robinet, s'il assure un réglage correct du débit, émet un bruit de fonctionnement excessif pour les vitesses du fluide élevées, ainsi qu'on l'a indiqué en détail plus haut, en particulier lorsque les ouvertures en secteurs sont presque à la fermeture, réalisant des étranglements de la veine fluide, générateurs de tourbillons favorisant le bruit.

La figure 2 représente, en coupe partielle, une partie d'un robinet quart-de-tour suivant l'art connu, mettant en œuvre un disque mobile de forme dite « papillon ». Le disque 4 ne comporte plus de parois continues sur sa surface latérale, comme dans le cas de la figure 1, et les ouvertures 7 et 8 sont ainsi ouvertes latéralement, ce qui améliore l'écoulement de l'eau.

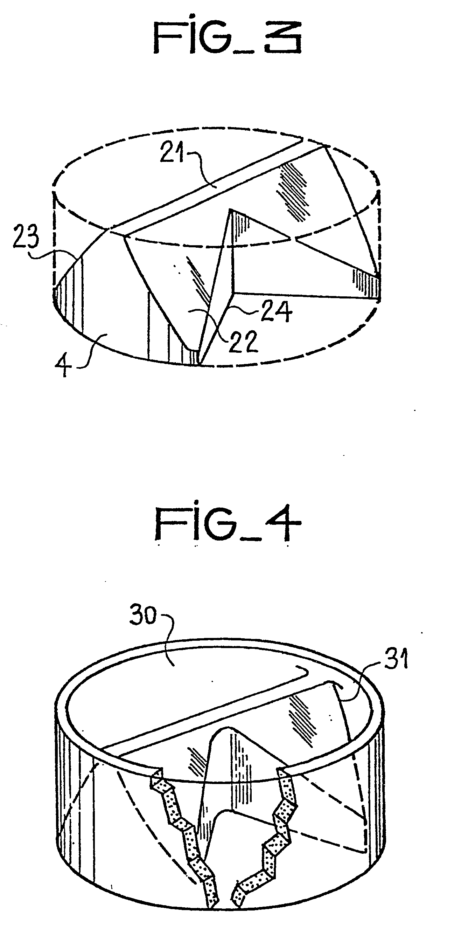

La figure 3 représente un disque fixe pour robinet quart-de-tour selon l'invention. Il est représenté en position inversée pour une meilleure compréhension.

Il est caractérisé par le remplacement de la face plane d'entrée 12 du disque connu de la figure 1, par une face en forme de dièdre, avec une arête 21 et deux plans 22 et 23. Chaque ouverture en secteur 24 a son axe contenu dans le plan perpendiculaire de l'arête du dièdre.

Après mise en place dans le support fixe 5 du robinet de la figure 1, et en coopération avec les parois cylindriques internes de ce support, les plans tels que 22 du disque fixe réalisent une réduction progressive et régulière de la section libre offerte à l'eau, et produisent un effet de guidage hydrodynamique de la veine fluide qui la maintient en régime laminaire, même pour les petites ouvertures, en se comportant comme des déflecteurs d'entrée. Le bruit produit par le robinet ainsi équipé est alors réduit dans de grandes proportions, l'apparition des tourbillons étant rejetée vers un régime de débits se situant très au-dessus des valeurs usuelles.

La figure 4 représente une variante de réalisation du disque fixe de l'invention. Suivant cette variante, un manchon cylindrique extérieur est ajouté sur la surface latérale du disque 4. Ce manchon, réalisé en un matériau unique et continu avec celui du disque, joue le rôle de la paroi cylindrique interne du support de la figure 1 pour la réalisation de l'effet hydrodynamique recherché. Il permet de simplifier la fixation du disque dans ce cylindre, qui ne joue plus alors qu'un rôle de support mécanique.

De plus, la zone de raccordement 31 entre un des plans du dièdre et le cylindre peut être mise en forme avec précision, soit suivant un profil en gouttière, soit suivant un dièdre rentrant améliorant l'écoulement.

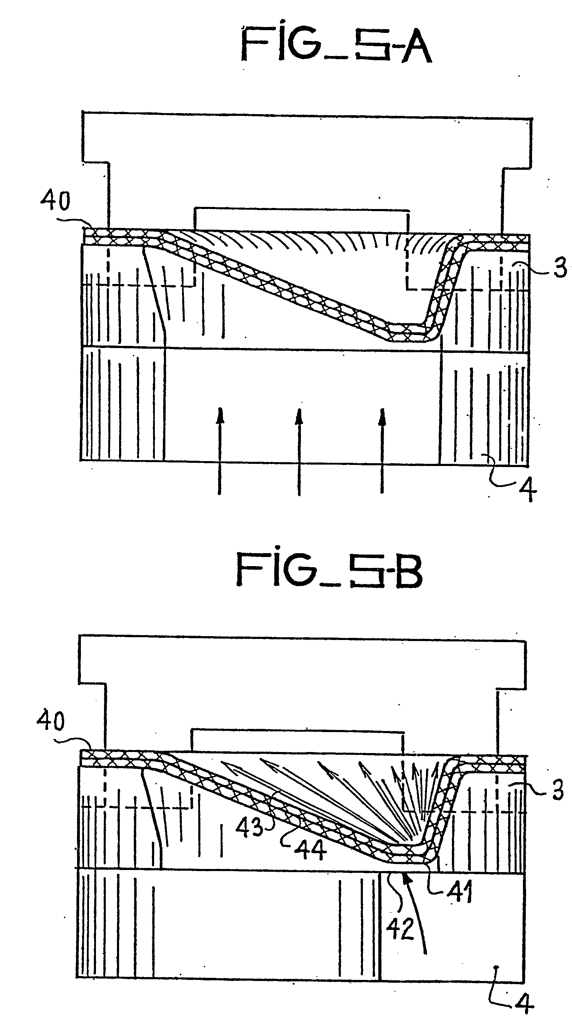

La figure 5 représente, suivant deux vues a et b, une disposition supplémentaire du robinet selon l'invention, située cette fois sur la face de sortie du disque mobile 3, à savoir un grillage 40. La caractéristique de ce grillage, qui est habituellement en forme de disque plan dans les réalisations connues, est d'être mis sous la forme d'une paire de cônes, chaque cône ayant son axe incliné dans la direction d'une des faces radiales d'une des deux ouvertures en forme de secteur.

Le fonctionnement d'un tel cône grillagé est le suivant, illustré par deux vues prises par rapport au disque mobile pour une meilleure compréhension :

Aux grandes ouvertures, en (a), le disque mobile 3 a son ouverture en coïncidence avec le disque fixe 4. L'eau traverse sans rencontrer d'étranglement, et le grillage 40 est traversé dans son ensemble sans jouer aucun rôle ; de plus, dans le cas où le disque mobile à la forme « papillon » de la figure 2, une partie de l'eau passe latéralement par les ouvertures du disque mobile.

En revanche, aux petites ouvertures, en (b), le passage laissé à l'eau en 42 est réduit, et des phénomènes tourbillonnaires résiduels peuvent se produire. Le cône grillagé présente alors son sommet 41, à proximité immédiate de l'ouverture étroite 42, et le jet fluide est alors guidé à sa sortie, de façon régulière et continue, suivant les flèches telles que 43, le reste du cône grillagé 44 se comportant comme un cône d'expansion anti-tourbillonnaire.

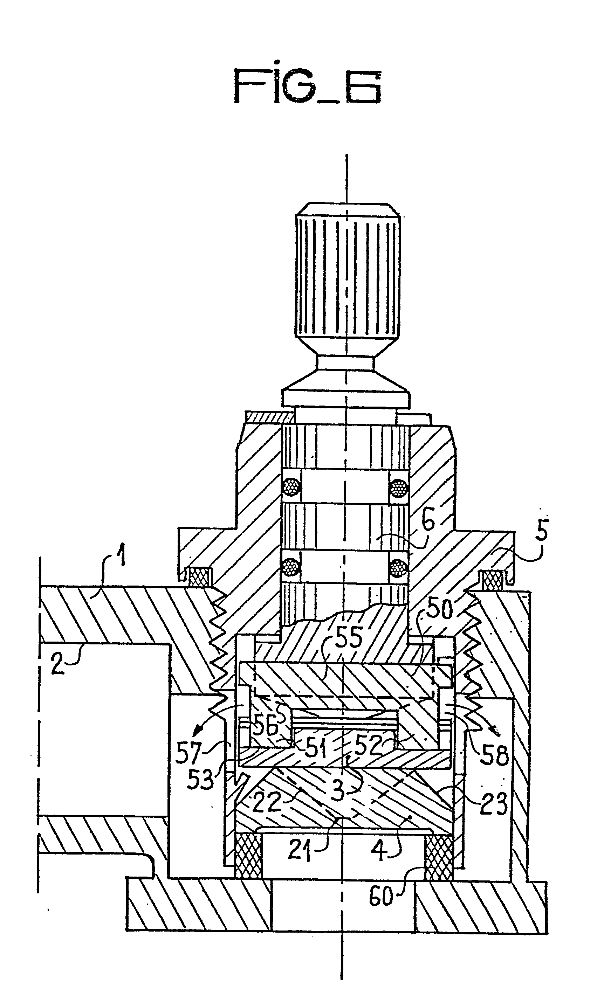

La figure 6 représente l'ensemble du robinet à faible émission sonore selon l'invention, les mêmes éléments y portant les mêmes nombres de référence. Il comporte une autre disposition supplémentaire pour réduire le risque de création de tourbillons à la sortie du jet fluide. Pour cela, la tige 6 de commande n'est plus reliée mécaniquement au disque mobile 3, comme représenté sur la figure 1 de l'art connu.

La commande du disque est faite par une pièce intermédiaire 50, affectant la forme générale de la lettre U, dont les branches 51 et 52 pénètrent dans des logements 53 et 54 du disque, et la partie médiane 55 dans une fente portée par l'extrémité libre de la tige de commande. Dans ces conditions, la face en bout 56 de la tige peut être, selon l'invention, aisément mise en forme de déflecteur de révolution pour l'eau, améliorant son guidage vers les ouvertures latérales 57 et 58 du support 5. La forme peut être soit un cône à grand angle au sommet, soit, de préférence, une calotte sphérique.

La pièce intermédiaire de commande peut être de préférence réalisée en acier inoxydable, et peut, de plus, assumer le rôle, par une de ses extrémités transversales, de butée « quart-de-tour ».

On doit remarquer que, dans ce qui précède, le robinet de l'invention a été décrit, à titre d'exemple, dans le cas du quart-de-tour, avec deux ouvertures en secteurs. Mais il doit être bien entendu que le domaine de l'invention s'étend au cas de robinets à un ou trois secteurs, pour lesquels l'angle de rotation serait respectivement 180° et 60°.

On doit aussi remarquer que, bien que le robinet de l'invention n'ait été décrit que dans le cas d'un seul grillage, l'utilisation d'une pluralité de grillages de pas différents est comprise dans le domaine de l'invention.

On doit par ailleurs remarquer que, dans le mode de réalisation décrit, la force d'appui élastique des deux disques l'un sur l'autre ne pouvant être exercée par la pièce en forme de fer à cheval, c'est sur le disque fixe qu'est exercée cette force, par le joint annulaire 60 qui assure l'étanchéité entre le corps du robinet et le support de disque. Cette disposition fait ainsi assumer, avantageusement, deux fonctions au joint, le disque fixe étant monté coulissant.

Il est d'autre part à observer, que, bien que la description ait été faite dans le cas d'un grillage en forme de cône, une variante de réalisation où le cône est partiellement coupé suivant les surfaces latérales du disque, conférant au grillage la forme de deux plans inclinés de pente inégale, est comprise dans le domaine de l'invention.

De même, il est à remarquer que les surfaces planes du dièdre porté par le disque tournant peuvent, sans sortir de l'invention, affecter une forme dotée d'un rayon de courbure de valeur et de signe adaptés à la conservation du régime d'écoulement laminaire.

Il est aussi à noter que le dièdre de l'invention peut être constitué ou recouvert d'un matériau différent, fait par exemple d'une matière plastique, en particulier dotée de propriétés élastiques pouvant constituer à réduire les phénomènes vibratoires.

Il est, enfin, à remarquer que, par rapport à des robinets quart-de-tour réalisés suivant la structure connue de la figure 1, le robinet réalisé selon l'invention a permis d'obtenir, pour des débits de valeurs comparables, une amélioration dans la réduction du bruit de l'ordre de 5 à 10 dB.

**Revendications**

1. Robinet à liquide à faible émission sonore, comportant un corps (1) cylindrique avec un tube de sortie (2) pour l'évacuation du liquide, un support intérieur cylindrique (5) pour recevoir un premier disque fixe (4) percé d'ouvertures en secteur (24) et présentant une face d'entrée pour le liquide, et une tige de commande (6) assurant la rotation d'un second disque tournant (3) percé d'ouvertures en secteur, les deux disques étant appliqués l'un sur l'autre, en définissant par leur position angulaire relative, le passage du liquide, caractérisé en ce que la face d'entrée du disque fixe (4) a la forme d'un dièdre saillant (22, 23), dont l'arête (21) est parallèle à la face d'entrée, chaque ouverture en secteur (24) ayant son axe de symétrie contenu dans un plan perpendiculaire à l'arête (21) du dièdre (22, 23).

2. Robinet à liquide à faible émission sonore, comportant un corps (1) cylindrique avec un tube de sortie (2) pour l'évacuation du liquide, un support intérieur cylindrique (5) pour recevoir un premier disque fixe (4) percé d'ouvertures en secteur (24) et présentant une face d'entrée pour le liquide, et une tige de commande (6) assurant la rotation d'un second disque tournant (3) percé d'ouvertures en secteur, les deux disques étant appliqués l'un sur l'autre, en définissant par leur position angulaire relative, le passage du liquide, caractérisé en ce que la face d'entrée du disque fixe (4) comporte un dièdre en toit dont l'arête est perpendiculaire au plan de symétrie des ouvertu-

res en secteur, les surfaces du dièdre, percées d'une ouverture en secteur, réalisant en coopération avec les parois cylindriques internes du support (5) une réduction progressive et régulière de la section libre offerte au liquide, la forme desdites surfaces étant dotée d'un rayon de courbure de valeur et de signe adaptés à la conservation du régime d'écoulement laminaire.

3. Robinet selon la revendication 1 ou 2, caractérisé en ce que le disque fixe est entouré, sur sa surface latérale, d'un manchon cylindrique, de hauteur au moins égale à sa hauteur, ce manchon étant constitué du même matériau que le disque, et d'un seul tenant avec lui.

4. Robinet selon l'une quelconque des revendications précédentes, caractérisé en ce que la tige de commande (6) assure la rotation du disque tournant (3) par l'intermédiaire d'une pièce en forme de « U » (50), dont les branches (51, 52) pénètrent dans des logements diamétralement opposés sur le disque, et la partie médiane (55) dans une fente portée par l'extrémité (56) de la tige de commande (6).

5. Robinet selon la revendication 4, caractérisé en ce que l'extrémité de la tige de commande (6) est en forme de cône.

6. Robinet selon la revendication 4, caractérisé en ce que l'extrémité de la tige de commande (6) est en forme de calotte sphérique.

7. Robinet selon l'une des revendications précédentes, caractérisé en ce que la face de sortie du disque tournant (4) porte un grillage (40), chaque ouverture en secteur étant pénétrée par une partie de ce grillage mis en forme de cône, l'axe de chaque cône étant orienté vers celui des bords de l'ouverture qui correspond à la fermeture totale du passage de l'eau.

8. Robinet selon l'une des revendications précédentes, caractérisé en ce que la face de sortie du disque tournant (3) porte un grillage (40), chaque ouverture en secteur étant pénétrée par une partie de ce grillage mis en forme de deux plans inclinés de pente inégale, le plan de plus grande pente étant orienté vers celui des bords de l'ouverture qui correspond à la fermeture totale du passage de l'eau.

9. Robinet selon l'une quelconque des revendications précédentes, caractérisé en ce que les disques fixe et mobile sont en matériau céramique.

10. Robinet selon l'une quelconque des revendications précédentes, caractérisé en ce que le dièdre du disque mobile (3) est constitué ou revêtu d'un matériau plastique doté de propriétés élastiques.

11. Robinet selon l'une quelconque des revendications précédentes, caractérisé en ce que la force qui applique les deux disques l'un sur l'autre est produite par le joint élastique annulaire (60) assurant l'étanchéité entre le corps (1) du robinet et le support (5) du disque fixe (4).

## Claims

1. Low noise level liquid tap comprising a cylindrical body (1) having an output tube (2) for the liquid, an inner cylindrical mount (5) for receiving a first stationary disc (4) traversed by sector-shaped openings (24) and having a liquid input face, and a control rod (6) for rotating a second rotatable disc (3) traversed by sector-shaped openings, the two discs being applied against one another defining the liquid passage by their relative angular positions, characterized in that the input face of the stationary disc (4) is shaped as a projecting bihedron (22, 23) the edge (21) of which is parallel to the input face, each sector-shaped opening (24) having its symmetry axis contained within a plane perpendicular to the edge (21) of the bihedron (22, 23).

2. Low noise level liquid tap comprising a cylindrical body (1) having an output tube (2) for the liquid, an inner cylindrical mount (5) for receiving a first stationary disc (4) traversed by sector-shaped openings (24) and having a liquid input face, and a control rod (6) for rotating a second rotatable disc (3) traversed by sector-shaped openings, the two discs being applied against one another defining the liquid passage by their relative angular position, characterized in that the input face of the stationary disc (4) comprises a roof-shaped bihedron the ridge of which is perpendicular to the symmetry plane of the sector-shaped openings, the surfaces of the bihedron being traversed by a sector-shaped opening and providing a progressive and regular reduction of the free section presented to the liquid in cooperation with the cylindrical inner walls of the mount (5), the shape of said surfaces having a curvature radius the value and sign of which are adapted for maintaining laminar flow conditions.

3. Tap in accordance with claims 1 or 2, characterized in that the stationary disc is surrounded on its lateral face by a cylindrical sleeve of at least equal height, said sleeve being formed of the same material as the disc and being integral therewith.

4. Tap in accordance with any of the preceding claims, characterized in that the control rod (6) assures the rotation of the rotatable disc (3) through a U-shaped part (50) the two legs (51, 52) of which penetrate into diametrally opposed recesses of the disc while the center part (5) penetrates into a slot carried by the end (56) of the control rod (6).

5. Tap in accordance with claim 4, characterized in that the end of the control rod (6) is cone-shaped.

6. Tap in accordance with claim 4, characterized in that the end of the control rod (6) is spherical dome shaped.

7. Tap in accordance with any of the preceding claims, characterized in that the output face of the rotatable disc (4) carries a grid (40), each sector-shaped opening being penetrated by a portion of this cone-shaped grid, the axis of each cone being oriented towards that of the edges of the opening corresponding to the total closure of the water passage.

8. Tap in accordance with any of the preceding claims, characterized in that the output face of the rotatable disc (3) carries a grid (40), each sector-shaped opening being traversed by a portion of this grid which has the shape of two inclined planes of unequal inclinations, the plane of greatest inclination being oriented towards that of the edges of the opening corresponding to the total closure of the water passage.

9. Tap in accordance with any of the preceding claims, characterized in that the stationary and movable discs are of ceramic material.

10. Tap in accordance with any of the preceding claims, characterized in that the bihedron of the movable disc (3) is formed of plastics material having resilient properties, or provided with a coating thereof.

11. Tap in accordance with any of the preceding claims, characterized in that the force urging the two discs one against the other is produced by the resilient sealing ring (60) sealing the mount (5) of the stationary disc (4) within the body (1) of the tap.

**Ansprüche**

1. Geräuscharmer Flüssigkeits-Absperrhahn mit einem zylindrischen Körper (1), der ein Auslaßrohr (2) für die Flüssigkeit aufweist, einem inneren zylindrischen Träger (5), der eine erste feststehende Scheibe (4) aufnimmt, welche mit sektorförmigen Öffnungen (24) versehen ist und eine Einlaßfläche für die Flüssigkeit aufweist, und mit einer Steuerstange (6), welche die Drehung einer zweiten, drehbaren Scheibe (3) gewährleistet, die von sektorförmigen Öffnungen durchbrochen ist, wobei diese beiden Scheiben gegeneinandergelegt sind und durch ihre relative Winkelstellung den Flüssigkeitsdurchgang definieren, dadurch gekennzeichnet, daß die Einlaßfläche der feststehenden Scheibe (4) die Form eines vorspringenden Zweiflachs (22, 23) aufweist, dessen Kante (21) parallel zu der Einlaßfläche ist, wobei jede sektorförmige Öffnung (24) eine Symmetrieachse aufweist, die in einer zur Kante (21) des Zweiflachs (22, 23) senkrechten Ebene enthalten ist.

2. Geräuscharmer Flüssigkeits-Absperrhahn mit einem zylindrischen Körper (1), der ein Auslaßrohr (2) für die Flüssigkeit aufweist, einem inneren zylindrischen Träger (5) zur Aufnahme einer ersten feststehenden Scheibe (4), die von sektorförmigen Öffnungen (24) durchbrochen ist und eine Einlaßfläche für die Flüssigkeit aufweist, und einer Steuerstange (6), welche die Drehung einer zweiten, drehbaren Scheibe (3) gewährleistet, die von sektorförmigen Öffnungen durchbrochen ist, wobei die beiden Scheiben gegeneinandergelegt sind und durch ihre relative Winkelstellung den Flüssigkeitsdurchgang definieren, dadurch gekennzeichnet, daß die Eintrittsfläche der feststehenden Scheibe (4) ein dachförmiges Zweiflach umfaßt, dessen Scheitel senkrecht zur Symmetrieebene der sektorförmigen Öffnungen ist, wobei die von einer sektorförmigen Öffnung durchbrochenen Oberflächen des Zweiflachs in Zusammenwirkung mit den zylindrischen Innenwandungen des Trägers (5) eine progressive und regelmäßige Verminderung des der Flüssigkeit gebotenen offenen Querschnitts verwirklichen und die Form der genannten Oberflächen einen Krümmungsradius aufweist, dessen Wert und Vorzeichen für eine Aufrechterhaltung der laminaren Strömungsbedingungen ausgelegt sind.

3. Absperrhahn nach Anspruch 1 oder 2, dadurch gekennzeichnet, daß die feststehende Scheibe auf ihrer Seitenfläche von einem zylindrischen Mantel umgeben ist, dessen Höhe wenigstens gleich ihrer Höhe ist, wobei dieser Mantel aus demselben Material wie die Scheibe und einstückig mit dieser ausgebildet ist.

4. Absperrhahn nach einem der vorstehenden Ansprüche, dadurch gekennzeichnet, daß die Steuerstange (6) die Drehung der drehbaren Scheibe (4) über ein U-förmiges Teil (50) gewährleistet, dessen Schenkel (51, 52) in diametral einander gegenüberliegende Aussparungen der Scheibe eindringen, während der mittlere Teil (55) in einen Schlitz eindringt, den das Ende (56) der Steuerstange (6) aufweist.

5. Absperrhahn nach Anspruch 4, dadurch gekennzeichnet, daß das Ende der Steuerstange (6) kegelförmig ist.

6. Absperrhahn nach Anspruch 4, dadurch gekennzeichnet, daß das Ende der Steuerstange (6) kugelschalenförmig ist.

7. Absperrhahn nach einem der vorstehenden Ansprüche, dadurch gekennzeichnet, daß die Austrittsfläche der drehbaren Scheibe (4) ein Gitter (40) trägt, wobei jede sektorförmige Öffnung von einem Teil dieses kegelförmigen Gitters durchdrungen ist und die Achse jedes Kegels zu der Achse der Ränder der Öffnung hin orientiert ist, welche dem vollständigen Verschließen des Wasserdurchgangs entspricht.

8. Absperrhahn nach einem der vorstehenden Ansprüche, dadurch gekennzeichnet, daß die Austrittsfläche der drehbaren Scheibe (3) ein Gitter (40) trägt, wobei jede sektorförmige Öffnung von einem Teil dieses Gitters durchdrungen ist, das die Form von zwei geneigten Ebenen ungleicher Neigung aufweist, und wobei die Ebene mit der größten Neigung zu derjenigen der Ränder der Öffnung hin orientiert ist, welche dem vollständigen Verschließen des Wasserdurchgangs entspricht.

9. Absperrhahn nach einem der vorstehenden Ansprüche, dadurch gekennzeichnet, daß die feststehende und die bewegliche Scheibe aus Keramikmaterial sind.

10. Absperrhahn nach einem der vorstehenden Ansprüche, dadurch gekennzeichnet, daß das Zweiflach der beweglichen Scheibe (3) aus einem elastische Eigenschaften aufweisenden Plastikmaterial gebildet oder mit diesem beschichtet ist.

11. Absperrhahn nach einem der vorstehenden Ansprüche, dadurch gekennzeichnet, daß die Kraft, durch welche die beiden Scheiben gegeneinander angelegt sind, durch die elastische Ringdichtung (60) erzeugt wird, welche die Abdichtung zwischen dem Körper (1) des Absperrhahns und dem Träger (5) der feststehenden Scheibe (4) gewährleistet.

# FIG_1

# FIG_2

# FIG_3

# FIG_4

# FIG_5-A

40

3

4

# FIG_5-B

40

3

43

44

41

42

4

# FIG_6